(19) Europäisches Patentamt
European Patent Office
Office européen des brevets

(11) Publication number: **0 253 553 B1**

(12) **EUROPEAN PATENT SPECIFICATION**

(45) Date of publication of patent specification: **07.10.92** (51) Int. Cl.$^5$: **C08K 5/34**

(21) Application number: **87305978.6**

(22) Date of filing: **07.07.87**

(54) **Photolytically crosslinkable thermally stable composition.**

(30) Priority: **17.07.86 US 886476**

(43) Date of publication of application:
**20.01.88 Bulletin 88/03**

(45) Publication of the grant of the patent:
**07.10.92 Bulletin 92/41**

(84) Designated Contracting States:
**BE DE FR GB IT NL**

(56) References cited:
**EP-A- 0 113 313**

(73) Proprietor: **THE DOW CHEMICAL COMPANY**
**2030 Dow Center Abbott Road P.O. Box 1967**
**Midland Michigan 48640-1967(US)**

(72) Inventor: **White, Jerry E.**
**404 Heathermoor Drive**
**Midland Michigan 48640(US)**
Inventor: **Dehnke, Mary K.**
**7970 Mentor Avenue Apt. K-2**
**Mentor Ohio 44060(US)**
Inventor: **Tung, Lu Ho**
**401 Hunters Ridge**
**Midland Michigan 48640(US)**

(74) Representative: **Burford, Anthony Frederick et al**
**W.H. Beck, Greener & Co. 7 Stone Buildings**
**Lincoln's Inn**
**London WC2A 3SZ(GB)**

**EP 0 253 553 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to photolytically crosslinkable compositions. More particularly, the present invention relates to such compositions which are photolytically crosslinkable but are thermally stable, that is, not readily subject to crosslinking or vulcanization reactions at temperatures normally encountered under processing conditions. Such compositions find utility as adhesives particularly when blended with tackifiers. In addition, such compositions may be employed to prepare photo printing mats, wherein selective exposure to light results in crosslinking of the composition thereby imparting solvent resistance whereas unexposed and uncrosslinked layers not having such solvent resistance may be later removed during the developing process thereby achieving a flexible surface suitable for printing. In addition, the compositions of the invention may be employed in other suitable applications such as photo resists, photo masking and other applications.

In Canadian Patent 738,500, an ethylene bismaleimide and an N,N′-meta phenylene bismaleimide are disclosed for use as vulcanizing agents in the crosslinking of various unsaturated rubbers including homopolymers and heteropolymers of conjugated dienes, e.g., polybutadiene and butadiene/styrene copolymers, and polyurethane rubbers. Such vulcanizing agents were thermally activated.

In U.S. Patent 3,674,486, photoresist materials comprising a photosensitizer, a crosslinking agent and a rubber-like constituent are disclosed. Suitable crosslinking agents disclosed included multifunctional olefins, such as triallyl cyanurate, pentaerthritol triacrylate, and polyvinyl cinnamate.

In U.S. Patent Nos. 4,079,041, 4,163,097, 4,158,730 and 4,158,731 there are disclosed certain organic polymers which can be crosslinked under the action of light having a molecular weight of at least 1,000 and containing as light sensitive groups disubstituted maleimide functionality.

In U.S. Patent 2,925,407, the curing of high molecular weight substantially unsaturated polymers by the use of free-radical generators such as organic peroxide and free-radical exceptors such as bismaleimide compounds, among others, is disclosed. Such curing operation is thermally activated.

Despite advances in the art utilizing photolytically active curing agents, there remains a desire to prepare compositions that may be photolytically crosslinked but are insensitive to curing prematurely under the action of heat. Compositions which are not thermally stable as previously described, cannot easily be employed in thermal processing operations such as melt extrusion, extrusion coating, melt mixing and other high temperature processes. Alternative techniques such as solvent deposition or other suitable technique must be employed to manufacture and apply thermally sensitive compositions. However, solvents are both expensive and undesirable from the standpoint of atmospheric emissions and combustion hazard. Moreover, thermally unstable compositions and materials prepared therefrom must be subsequently treated in a manner so as to minimize the effects of thermal crosslinking. For example, printing plates that are subject to thermal crosslinking should be maintained at reduced temperatures in order to impart practical lifetimes. Finally, current adhesives used in the preparation of masking tapes and other adhesive products are normally deposited onto a paper stock by solvent casting. The compositions are then partially crosslinked through the use of sulfur vulcanizing agents. This procedure is both cumbersome and difficult to control in a manner to give uniform product properties. Such compositions may also require a paper stock which has been previously pretreated by the use of reactive primers.

It would be desirable to provide a composition which is photolytically crosslinkable but thermally stable which may be prepared, processed, and applied using standard thermal processing techniques.

It would be desirable to provide a composition which is photolytically crosslinkable but thermally stable and which reduces or eliminates the need to use solvents in its preparation or application.

EP 0113313 A discloses a light sensitive composition comprising an aliphatic unsaturated polymer and an N,N'-bis-(3,4-disubstituted maleimido) crosslinking agent. It is specifically required that the polymer is free from aromatic groups. The divalent radical joining the two maleimido moieties of the N,N'-bis-(3,4-disubstituted maleimido) crosslinking agent can be aliphatic or aromatic. The crosslinking agents exemplified in the Examples are N,N'-bis-(3,4-dimethylmaleimido) hexane and octane.

According to the present invention there is provided a photolytically crosslinkable but thermally stable composition comprising at least one crosslinkable copolymer of one or more conjugated dienes and one or more copolymerizable monovinylidene aromatic compounds, said copolymer containing residual unsaturation and a crosslinkable quantity of a multifunctional 3,4 disubstituted maleimide compound corresponding to the formula:

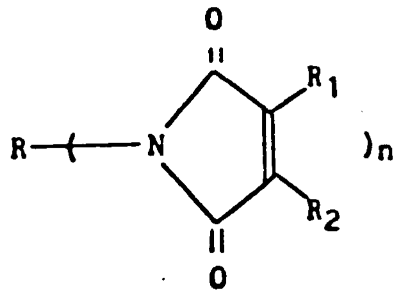

(I)

wherein R is a n-valent aliphatic moiety containing up to 36 carbon atoms; $R_1$ and $R_2$ independently in each occurrence are alkyl, cycloalkyl or aryl radical of up to 12 carbon atoms, or $R_1$ and $R_2$ conjointly denote the remaining part of a 5 or 6 membered carbocyclic ring, or substituted carbocyclic ring which is saturated except as characterized in the maleimido group and contains up to a total of 12 carbon atoms; and n is 2, 3 or 4.

Any crosslinkable copolymer of one or more conjugated dienes and one or more copolymerizable monovinylidene aromatic compounds which is reactive with the above described multifunctional 3,4-disubstituted maleimide under photolytic reaction condition is suitable for use according to the present invention. Said crosslinkable polymers are those containing residual unsaturation and can be block or random copolymers. Specific examples include the well known copolymers of butadiene or isoprene with styrene or mixtures of styrene and $\alpha$-methylstyrene.

The multifunctional 3,4-disubstituted maleimide compounds preferred tor use according to the present invention are characterized by a high degree of solubility in the crosslinkable polymer and in any additional components employed in the present compositions and by being thermally stable. Preferably such compositions are completely miscible in the crosslinkable polymer or soluble to a degree such that a crosslinkable quantity thereof may be dissolved in the crosslinkable polymer. Most preferably, the maleimide substituted crosslinking agents are soluble in the crosslinkable polymer to the extent of at least 0.01 grams per gram of crosslinkable polymer.

By the term "thermally stable" is meant that the maleimide containing composition of the present invention retains the practical ability to suitably flow under melt processing conditions after exposure to a temperature of 200°C for ten minutes. Practically such flow should be at least a melt flow rate of 1.0 as measured by the American Society of Testing Materials (ASTM) method D 1238 Schedule G. Preferably, such compositions retain at least 90 percent of their crosslinking ability on a weight basis after such exposure. In determining the percentage crosslinking ability remaining, the unreacted crosslinker may be extracted or merely analyzed by infrared or other technique and the ratio of remaining unreacted crosslinker calculated.

Curing or crosslinking of the composition of the invention may be initiated by the use of electromagnetic radiation of a wave length between 180 and 1000 nanometers. It is generally desirable that the maleimide substituted crosslinking agent be photolytically active upon exposure to electro-magnetic radiation of a wavelength between 180 and 1000 nanometers, preferably between 180 and 400 nanometers. Accordingly, curing of the compositions is generally conducted in such wavelength range.

Amongst the photolytically active maleimide substituted crosslinking agents, it has been generally observed that greater activity may be obtained by a specific selection of particular divalent aliphatic moieties represented by R in formula I. Particularly preferred divalent aliphatic moieties include alkylenes having at least 8 carbons separating the respective covalent bonds. By the term "aliphatic" is included the saturated derivatives of alkanes, ethers, thioethers, polyethers, etc. For example, suitable R groups include the following:

$$-(CH_2)_m- \quad , \text{ and } R'_{(4-n')}-C[CH_2(OCH_2\underset{R_3}{CH})_m]_{n'},$$

wherein m independently in each occurrence is a positive integers greater than 0, R' is hydrogen or $C_1$-$C_6$ alkyl, $R_3$ independently in each occurrence is alkyl or cycloalkyl radical of up to 12 carbon atoms, and n' is 1, 2, 3, or 4.

In addition to the above components, the photolytically crosslinkable but thermally stable composition of the present invention may additionally comprise components especially adapted to provide desired end use properties. For example, a photosensitizer such as thioxanthones, quinones or other sensitizers may be employed to provide greater sensitivity to electromagnetic radiation.

In the embodiment of the present invention employed as an adhesive composition, additional well known components to adhesive formulations such as tackifiers may be employed. Preferred tackifiers are resins or plasticizers such as polyterpene resins, terpene-phenol resins, rosin esters, as well as piperylene derivatives or other petroleum derived tackifiers, and polymeric tackifiers derived from styrene or $\alpha$-methylstyrene. A particularly preferred tackifer capable of use to prepare a two component photolytically crosslinkable composition of exceptional photolytic activity is a saturated polymer of a $C_5$ petroleum distillation stream eg. a polymer of piperylene. Additional, suitable components include flow-aids, anti-blocking aids, extenders, fillers, anti-oxidants, solvents, etc.

Suitably, tackifiers may be employed in sufficient amounts so as to provide up to a 50 percent gel content in the desired formation after photolytic crosslinking. Amounts of such tackifier may be on the order of up to 70 percent by weight of the composition formulation. The amount of crosslinkable copolymer and multifunctional 3,4-disubstituted maleimide compounds employed are selected to provide the desired amount of crosslinking properties. Preferably, based on crosslinkable polymer weight from 0.01 percent to 10 percent of the 3,4-disubstituted maleimide compound is employed. Additional components are employed in amounts suitable to achieve the desired purpose as is well known in the art.

In the embodiment specifically adapted to the preparation and use as a photoresist material or a printing mat, the composition of the invention may be coated, extruded or otherwise formed into a thin sheet optionally in combination with a suitable substrate or backing material such as a polymeric, cellulosic or metallic substrate. The desired selective exposure to electromagnetic radiation, specifically light, may be obtained by any suitable technique such as blocking off of areas thereof to be unexposed, or the use of standard photographic techniques such as a negative interlayer or laser imaging.

In addition to the previously identified benefits achieved by melt processing of the present invention, the present compositions enjoy improvements in odor reduction and ease of product handling and formulation due to the powdery nature of the 3,4-disubstituted maleimide crosslinking agent employed therein.

The following examples are provided to further illustrate the invention.

## Example 1

30 Grams of a commercially available styrene-isoprene-styrene triblock copolymer (Kraton® 1107 available from Shell Chemical Company) was dissolved in 30 milliliters of methylene chloride along with 0.6 grams of N,N′-bis(dimethylmaleimido)hexane (prepared as described by F. C. DeSchryver, et al., J. Polym. Sci., Part A-1, Volume 10, Page 1687 (1972)). The solution was then evaporated under vacuum to dryness. The melt flow rate of the mixture is 9.9 as measured according to ASTM Method D 1238 Schedule G.

The resulting resin was exposed to a temperature of 200 °C for 20 minutes. After cooling, the melt flow rate measured by the above technique increased to 10.9, thereby indicating that the composition possessed suitable thermal stability. Sheets approximately 0.2 millimeters in thickness were compression molded at 180 °C. Unmodified samples of Kraton® 1107 were similarly prepared. Both samples were irradiated on one surface only with an unfocused, unfiltered 450W Hanovia lamp at a distance of 7 centimeters. Gel fractions were determined after exposure by extraction with methylene chloride for 24 hours. Results are contained in Table I.

TABLE I

| Irradiation Time (sec) | wt. % Gel | |
|---|---|---|
| | blend | unmodified |
| 0 | 0 | 0 |
| 60 | 2.3 | - |
| 120 | 4.6 | 0.9 |
| 360 | 46.7 | 1.1 |
| 480 | - | 3.9 |

Example 2

30 Grams of a tapered styrene-butadiene-styrene triblock containing 61.4 percent butadiene having a number average molecular weight as determined by gel permeation chromatography of 62,200 were dissolved in 30 milliliters of methylene chloride. 0.6 Grams of N,N′-bis(dimethylmaleimido)hexane was added. The solution was then evaporated to dryness in a vacuum and the resulting mixture havig a melt flow rate of 57 as measured according to the technique of Example 1 was recovered. After exposure for 20 minutes to a temperature of 200 °C, the composition has a melt flow rate of 40, thereby indicating a thermally stable composition.

Compression molded samples approximately 0.25 millimeters in thickness were prepared and irradiated as in Example 1. Gel fractions were determined according to the techniques of Example 1. Results are contained in Table II.

TABLE II

| Irradiation Time (sec) | wt. % Gel | |
|---|---|---|
| | blend | unmodified |
| 0 | 0 | 0 |
| 30 | 7.3 | 2.5 |
| 60 | 10.8 | 3.0 |
| 120 | 37.0 | 5.4 |
| 240 | 72.5 | 7.1 |

Example 3

The procedures of Example 1 were substantially repeated employing as a photo-crosslinker 1 weight percent N,N′-bis(3,4-dimethylmaleimido)decane. Films approximately 0.2 millimeters in thickness were irradiated at 7 centimeters from an unfocused, unfiltered 450-W Hanovia lamp. Insoluble portions (percent gel) of photolyzed specimens after extraction with methylene chloride for 24 hours at room temperature are provided in Table III.

## TABLE III

| Irradiation Time (sec) | wt. % gel |
|---|---|
| 30 | 3.5 |
| 60 | 7.7 |
| 120 | 26.5 |
| 240 | 76.9 |

### Example 4

Tackified blends containing photolytic, crosslinking agents according to the present invention were prepared and tested substantially according to the procedure of Example 1. Accordingly, 1:1 weight blends of Kraton® 1107 brand block copolymer and REGALREZ® 1094 brand tackifier resin containing the weight percentage and type of photolytically active crosslinkers further indicated in Table IV were prepared and cast from toluene into 0.4 mm thick coatings on quick release paper (type C-60564 available from Kimberly Clark Corp.). REGALREZ® 1094 was a hydrogenated terpene base oligomeric tackifier available from Hercules Inc. The samples were irradiated under a nitrogen atmosphere inside a closed container equipped with a quartz window at the focal-point of a Porta-Cure® model 1,500 F ultraviolet lamp made by Hanovia company, equipped with a model PC-1521 source of ultraviolet light. Percent gel fractions were determined as in Example 1. Crosslinking agents, amounts, irradiation times and results are contained in Table IV.

## TABLE IV

| Irradiation Time (sec) | wt % gel photocrosslinker (wt %) | | |
|---|---|---|---|
| | A (2.5) | B (2.7) | C (2.5) |
| 1 | 21.2 | 31.5 | 17.0 |
| 2 | 48.3 | 44.4 | 41.7 |
| 4 | 53.6 | 53.8 | 51.4 |

A= 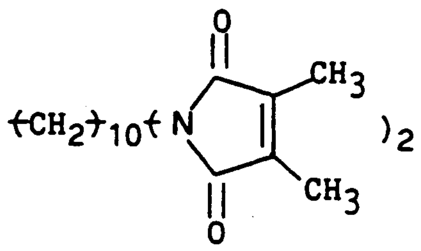 , N,N'-bis(3,4-dimethylmaleimido)-
-decane

B= 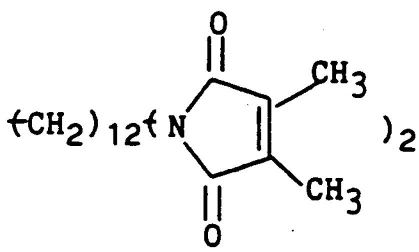 ,N,N'-bis(3,4-dimethylmaleimido)-
-dodecane

C= 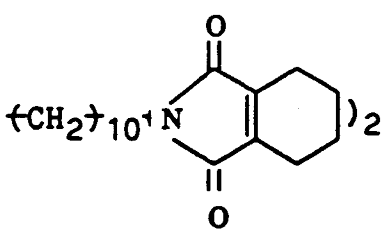 , N,N'-bis(tetrahydrophthalimido)-
-decane

Example 5

Additional samples of adhesive formulations that possess suitable pressure sensitive adhesive properties were prepared and tested for photolytic crosslinking properties. Accordigly Kraton® 1107 brand block copolymer (10 grams) was combined with a mixture of partially unsaturated terpene based tacki- fiers Wingtack® 95 (7.0 grams) and Wingtack® 10 (5.2 grams). Both tackifiers were available from Goodyear Chemical Co. Composition 1 further contained N,N'-bis- (3,4-dimethylmaleimido)decane (2.5 weight percent). Composition 2 further contained N,N'-bis(3,4-dimethylmaleimido)decane (2.5 weight percent) and thioxanthone photosensitizer (0.6 weight percent). Composition 3 further contained only thioxanthone. Thin films (0.4mm) were solvent cast onto release agent coated paper, irradiated and tested for gel content as in Example 4. Results are contained in Table V.

TABLE V

| Irradiation Time (sec) | wt. % Gel | | |
|---|---|---|---|
| | Comp. 1 | Comp. 2 | Comp. 3 |
| 1 | 9.1 | 36.6 | 2.4 |
| 2 | 25.0 | 44.9 | 5.9 |
| 3 | - | 47.7 | 9.4 |
| 4 | 44.0 | 50.0 | 5.1 |
| 6 | 47.5 | 50.0 | 10.9 |

The results indicate essentially complete crosslinking of the available crosslinkable resin utilizing the combination crosslinker and photosensitizer in reduced exposure time compared to use of the crosslinker alone. Also the results indicate that the photosensitizer itself is not capable of causing appreciable crosslinking in the reaction times studied. Gel formation is considered to be a favorable indication that initial attachment of the adhesive formulation to a substrate such as those employed in preparing masking tapes by photocrosslinking is possible.

Example 6

Pressure sensitive adhesive formulations having the parts by weight of components in Table VI were prepared and then dissolved in toluene (50 percent solids). Films were then cast on crepe stocks (Kimberly-Clark, type C-60564) using a 10-mil (0.25 mm) Bird bar. The solvent was allowed to evaporate at room temperature for one hour and the resulting tape samples were heated at 90 °C for 4 minutes. Final thickness of the pressure sensitive adhesive film deposit prepared in this manner was 0.4 mm. The specimens were cut into 1 x 4" (2.5 cm x 10 cm) strips and irradiated for 4 sec. substantially according to the technique of Example 4. Peel tests (180 °) for cured and uncured tapes were then determined according to Specification 1 of the Pressure Sensitive Tape Council (PSTC-1) at 73 °F (23 °C), 50 percent relative humidity, employing a dwell time less than or equal to one minute on the test plate. Results are listed in Table VII.

Table VI

| Component | Formulation No. 1 | 2 | 3 | 4 | 5 |
|---|---|---|---|---|---|
| Block copolymer[1] | 10.0 | 10.0 | - | 10.0 | - |
| Block copolymer[2] | - | - | 10.0 | - | 10.0 |
| Tackifier 1[3] | 7.0 | 7.0 | 7.0 | 7.0 | 7.0 |
| Tackifier 2[4] | 5.2 | 5.2 | 5.2 | 5.2 | 5.2 |
| Antioxidant[5] | 0.1 | - | | 0.1 | 0.1 |
| Photocrosslinker[6] | - | 0.56 | 0.56 | 0.56 | 0.56 |

[1] Kraton® 1107 available from Shell Chemical Company.

[2] Styrene/α-methylstyrene-isoprene-styrene/α-methylstyrene containing 81.0 percent by weight isoprene, 11.4 percent a-methylstyrene and 7.6 percent styrene prepared at a polymerization temperature of 70°C.

[3] Wingtack® 95 available from Goodyear Rubber Company.

[4] Wingtack® 10 available from Goodyear Rubber Company.

[5] Irganox 1010 available from Ciba Giegy Corporation.

[6] N,N'-bis(3,4-dimethylmaleimido)-decane.

TABLE VII

| Formulation No | 180° Peel Adhesion (oz/inch width of tape (N·m) Unirradiated | after 4 rec. of irradiation |
|---|---|---|
| 1 | 44 (0.31) | 48 (0.34) |
| 2 | 24 (0.17) | 19 (0.13) |
| 3 | 40 (0.28) | 19 (0.13) |
| 4 | 24 (0.17) | 19 (0.13) |
| 5 | 40 (0.28) | 20 (0.14) |

The reduction in peel adhesion of formulations 2-5 indicates gellation of the crosslinkable resin has occurred providing attachment of the adhesive film to the crepe stock. Remaining adhesiveness is provided by the tackifier.

"Ghosting" tests to indicate separation of the adhesive from the crepe stock were performed on the above prepared tape samples in the following manner. Samples of both irradiated and unirradiated tapes were applied to a clean photographic ferrotype drying plate with a 4.5 lb (2 kg) roller as specified by PSTC-1. The plate with attached tapes was heated at 130 °C for 45 min. The tapes were then peeled from the plate while still hot (130 °C) at angles of 90° and 180° to the plate. Additional samples of the tapes were peeled from the plate after the assembly was allowed to cool to room temperature. Tapes pass the "ghosting" test if no residue remains on the test plate. Results are shown in Table VIII.

TABLE VIII

| Formulation | Irradiation Time, Sec. | Results Room Temp. | 130°C |
|---|---|---|---|
| 1 | 0 | Fail | Fail |
| 1 | 4 | Fail | Fail |
| 2 | 0 | Pass | Fail |
| 2 | 4 | Pass | Pass |
| 3 | 0 | Pass | Fail |
| 3 | 4 | Pass | Pass |
| 4 | 0 | Pass | Fail |
| 4 | 4 | Pass | Pass |
| 5 | 0 | Pass | Fail |
| 5 | 4 | Pass | Pass |

In all cases, it is seen that photocrosslinked films of the present invention possess good, high temperature "ghosting" properties indicating integrity and continuity to the deposited cured adhesive film and good adhesion to the substrate.

Example 7

Pressure sensitive adhesive tapes prepared and irradiated as outlined in Example 6 were immersed in toluene for 24 hours. Cured adhesive films according to the invention containing a photocrosslinker produce a swollen gel which remains tightly bound to the crepe paper substrate. Removal of the gel requires mechanical separation with a spatula or razor blade. Adhesive films not containing a photolytically active crosslinker dissolve in the toluene.

**Claims**

**1.** A photolytically crosslinkable but thermally stable composition comprising at least one crosslinkable copolymer of one or more conjugated dienes and one or more copolymerizable monovinylidene aromatic compounds, said copolymer containing residual unsaturation and a crosslinkable quantity of a multifunctional 3,4-disubstituted maleimide compound corresponding to the formula:

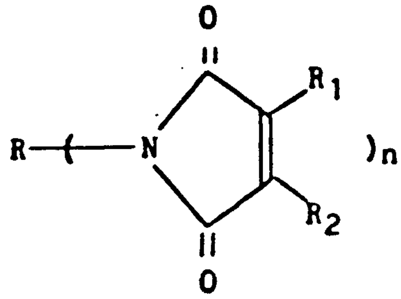

(I)

wherein R is a n-valent aliphatic moiety containing up to 36 carbon atoms; $R_1$ and $R_2$ independently in each occurrence are alkyl, cycloalkyl or aryl radical of up to 12 carbon atoms, or $R_1$ and $R_2$ conjointly denote the remaining part of a 5 or 6 membered carbocyclic ring, or substituted carbocyclic ring which is saturated except as characterized in the maleimido group and contains up to a total of 12 carbon atoms; and n is 2, 3 or 4.

2. A composition as claimed in Claim 1, wherein the crosslinkable copolymer is a random copolymer or block copolymer of butadiene or isoprene with one or more copolymerizable monovinylidene aromatic comonomers.

3. A composition as claimed in Claim 2, wherein the crosslinkable polymer comprises a block copolymer of isoprene or butadiene with styrene or a mixture of styrene and $\alpha$-methylstyrene.

4. A composition as claimed in any one of the preceding claims, wherein R corresponds to the formula:

$-(CH_2)_m-$ or 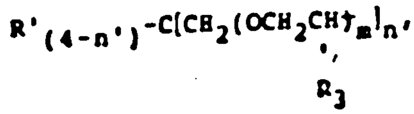

wherein m is independently in each occurrence a positive integer greater than 0, R' is hydrogen or $C_{1-6}$ alkyl, $R_3$ independently in each occurrence is alkyl or cycloalkyl radical of up to 12 carbon atoms and n' is 1, 2, 3 or 4.

5. A composition as claimed in any one of the preceding claims, wherein in the 3,4-disubstituted maleimide compound, R is alkylene having at least 8 carbons separating the covalent bonds.

6. A composition as claimed in any one of the preceding claims, wherein the 3,4-disubstituted maleimide is N,N'-bis (3,4-dimethylmaleimido) decane; N,N'-bis (3,4-dimethylmaleimido) dodecane; or N,N'-bis (tetrahydrophthalimido) decane.

7. A composition as claimed in any one of the preceding claims additionally comprising a tackifier.

8. A composition as claimed in Claim 7, wherein the tackifier is a saturated piperylene polymer.

9. A photo printing mat comprising a composition as claimed in any one of the preceding claims.

10. An adhesive comprising a composition as claimed in any of Claims 1 to 8.

**Patentansprüche**

1. Photolytisch vernetzbare jedoch thermisch stabile Mischung, umfassend wenigstens ein vernetzbares Copolymeres von einem oder mehreren konjugierten Dienen und einer oder mehreren copolymerisierbaren aromatischen Monovinylverbindungen, wobei dieses Coplymere restliche Unsättigung enthält, und eine vernetzbare Menge einer multifunktionellen 3,4-disubstituierten Maleinimidverbindung entsprechend der Formel:

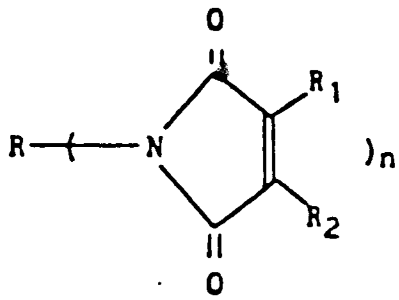

(I)

worin R eine n-wertige aliphatischer Einheit mit bis zu 36 Kohlenstoffatomen ist; $R_1$ und $R_2$ unabhängig in jedem Fall Alkyl-, Cycloalkyl- oder Arylreste mit bis zu 12 Kohlenstoffatomen sind,oder $R_1$ und $R_2$ zusammen den verbleibenden Teil eines fünf- oder sechsgliedrigen carbocyclischen Ringes oder substituierten carbocyclischen Ringes, welcher mit Ausnahme der angegebenen Maleinimidogruppe gesättigt ist und bis zu einer Gesamtzahl von 12 Kohlenstoffatomen enthält, bezeichnen; und n = 2, 3 oder 4 ist.

**2.** Mischung nach Anspruch 1, worin das vernetzbare Copolymere ein statistisches Copolymeres oder ein Blockcopolymeres von Butadien oder Isopren mit einem oder mehreren copolymerisierbaren aromatischen Monovinylidencomonomeren ist.

**3.** Mischung nach Anspruch 2, worin das vernetzbare Polymere ein Blockcopolymeres von Isopren oder Butadien mit Styrol oder einer Mischung von Styrol und $\alpha$-Methylstyrol ist.

**4.** Mischung nach einem der vorhergehenden Ansprüche, worin R der Formel entspricht:

$$-(CH_2)_m- \text{ oder } R'_{(4-n')}-C[CH_2(OCH_2\underset{R_3}{\underset{|}{CH}})_m]_{n'}$$

worin m unabhängig in jedem Fall eine positive ganze Zahl größer als 0 ist, R' Wasserstoff oder $C_{1-6}$-Alkyl ist, $R_3$ unabhängig in jedem Fall ein Alkyl- oder Cycloalkylrest mit bis zu 12 Kohlenstoffatomen ist, und n' = 1, 2, 3 oder 4 ist.

**5.** Mischung nach einem der vorhergehenden Ansprüche, worin R in der 3,4-disubstituierten Maleinimidverbindung Alkylen mit wenigstens 8 Kohlenstoffatomen, das die kovalenten Bindungen trennt, ist.

**6.** Mischung nach einem der vorhergehenden Ansprüche, worin die 3,4-disubstituierte Maleinimidverbindung N,N'-bis-(3,4-Dimethylmaleinimido)-decan, N,N'-bis-(3,4-Dimethylmaleinimido)-dodecan oder N,N'-bis-(Tetrahydrophthalimido)-decan ist.

**7.** Mischung nach einem der vorhergehenden Ansprüche, enthaltend zusätzlich einen Klebrigmacher.

**8.** Mischung nach Anspruch 7, worin der Klebrigmacher ein gesättigtes Piperylenpolymeres ist.

**9.** Photodruckbahn, umfassend eine Mischung nach einem der vorhergegenden Ansprüche.

**10.** Klebstoff, umfassend eine Mischung nach einem der vorhergehenden Ansprüche.

**Revendications**

1. Composition réticulable par photolyse, mais thermiquement stable, comprenant au moins un copolymère réticulable d'un ou de plusieurs diènes conjugués et d'un ou de plusieurs composés aromatiques monovinylidène copolymérisables, ledit copolymère contenant une insaturation résiduelle et une quantité réticulable d'un composé maléimide plurifonctionnel, disubstitué en positions 3 et 4, correspondant à la formule :

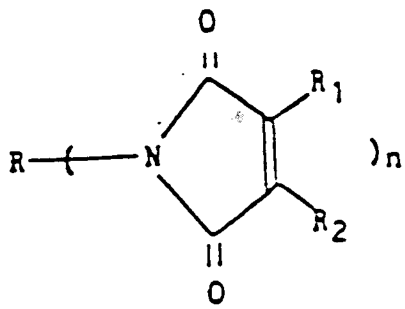

(I)

dans laquelle R représente un fragment aliphatique de valence n, contenant jusqu'à 36 atomes de carbone, $R_1$ et $R_2$ représentent indépendamment, à chaque occurrence, un radical alkyle, cycloalkyle ou aryle, ayant jusqu'à 12 atomes de carbone, ou bien $R_1$ et $R_2$, pris ensemble, représentent la partie restante d'un noyau carbocyclique à cinq ou six chaînons, substitué ou non, qui est saturé sauf en ce qui concerne la partie correspondant au groupe maléimido, et qui contient au total jusqu'à 12 atomes de carbone, et n est égal à 2, 3 ou 4.

2. Composition selon la revendication 1, dans laquelle le copolymère réticulable est un copolymère statistique ou un copolymère séquencé de butadiène ou d'isoprène avec un ou plusieurs comonomères aromatiques monovinylidène copolymérisables.

3. Composition selon la revendication 2, dans laquelle le polymère réticulable comprend un copolymère séquencé d'isoprène ou de butadiène avec du styrène ou un mélange de styrène et d'α-méthylstyrène.

4. Composition selon l'une quelconque des revendications précédentes, pour laquelle R correspond à la formule :

$$-(CH_2)_m- \quad \text{ou} \quad R'_{(4-n')}-C[CH_2(OCH_2\overset{R_3}{\overset{|}{C}}H)_m]_{n'}$$

dans laquelle m représente indépendamment, à chaque occurrence, un nombre entier positif supérieur à 0, R' est un atome d'hydrogène ou un groupe alkyle en $C_1$-$C_6$, $R_3$ représente indépendamment, à chaque occurrence, un radical alkyle ou cycloalkyle ayant jusqu'à 12 atomes de carbone, et n' est égal à 1, 2, 3 ou 4.

5. Composition selon l'une quelconque des revendications précédentes, pour laquelle, dans le composé maléimide disubstitué en positions 3 et 4, R est un groupe alkylène ayant au moins 8 atomes de carbone séparant les liaisons covalentes.

6. Composition selon l'une quelconque des revendications précédentes, dans laquelle le maléimide disubstitué en position 3 et 4 est le N,N'-bis(3,4-diméthylmaléimido)-décane, le N,N'-bis(3,4-diméthylmaléimido)-dodécane ou le N,N'-bis(tétrahydrophtalimido)-décane.

7. Composition selon l'une quelconque des revendications précédentes, comprenant en plus un agent pour l'adhérence.

8. Composition selon la revendication 7, dans laquelle l'agent pour l'adhérence est un polymère de

pipérylène saturé.

**9.** Mat de photogravure, comprenant une composition telle que revendiquée dans l'une quelconque des revendications précédentes.

**10.** Adhésif comprenant une composition telle que revendiquée dans l'une quelconque des revendications 1 à 8.